# EUROPÄISCHE PATENTANMELDUNG

(11) **EP 0 720 921 A1**
(43) Veröffentlichungstag der Anmeldung: **10.07.1996**
(21) Anmeldenummer: 95119763.1
(22) Anmeldetag: 14.12.1995
(51) Int. Cl.: B41M 5/26, C08L 83/04, C08K 3/00, C08K 3/04, C08K 3/10, C08K 3/22

(54) **Verfahren zur Herstellung von kontrastreichen beschrifteten, aus Silicon bestehenden Gegenständen**

(30) Priorität: 27.12.1994 DE 4446874; 27.09.1995 DE 19535837
(71) Anmelder: BAYER AG, 51368 Leverkusen (DE); FOBA Formenbau GmbH, D-58513 Lüdenscheid (DE)
(72) Erfinder: Naumann, Thomas, D-51371 Leverkusen (DE); Aberle, Hanns-Dieter, Dr., D-58256 Ennepetal (DE)
(74) Vertreter: Steiling, Lothar, Dr.

(57) **Zusammenfassung**

Die vorliegende Erfindung betrifft ein Verfahren zur Herstellung von kontrastreich beschrifteten, aus Silicon bestehenden Gegenständen und deren Verwendung.

## Beschreibung

Die vorliegende Erfindung betrifft ein Verfahren zur Herstellung von kontrastreich beschrifteten, aus Silicon bestehenden Gegenstände und deren Verwendung.

Wie bekannt ist, lassen sich sowohl organische Polymere, die bei Energieeinstrahlung sich verfärbende Füllstoffe enthalten, als auch spezielle Thermoplasten mittels Laserlicht beschriften (DE-A 3 917 294 und EP 0 190 997). Als Füllstoffe kommen dabei entweder Ruß oder Graphit oder aber farblose Zusatzstoffe, wie z.B. Kupfer(II)hydroxid-Phosphat und MoO₃ in Frage.

Bisher war es sehr aufwendig, Siliconharze oder Siliconkautschuke dauerhaft zu beschriften, da Formteile aus diesen Materialien hauptsächlich im Siebdruckverfahren mit pastösen Siliconelastomerzubereitungen bedruckt und anschließend durch Temperatur- oder Luftfeuchtigkeitseinschluß vulkanisiert wurden. Dieses Verfahren hat den Nachteil, daß es zeit- und arbeitsaufwendig ist, und daß die Beschriftung nur für eine begrenzte Zeit abriebfest ist.

Aufgabe der vorliegenden Erfindung war daher die Bereitstellung eines Verfahrens zur schnellen Herstellung dauerhaft und kontrastreich beschrifteter Gegenstände aus Silicon.

Überraschenderweise wurde nun gefunden, daß sich Gegenstände, wie z.B. Formteile, Folien und Fertigteile aus Silicon dauerhaft abriebfest mit Laserlicht beschriften lassen.

Gegenstand der vorliegenden Erfindung ist daher ein Verfahren zur Herstellung von kontrastreich beschrifteten, aus Silicon bestehenden Gegenständen, wobei ein vernetztes Silicon, das bezogen auf die Gesamtmischung 0,005 bis 30 Gew.-% an des weiter unten definierten Zusatzstoffen a) enthält, die einzeln oder im Gemisch vorliegen können, gezielt mit Laserlicht bestrahlt wird.

In dem erfindungsgemäßen Verfahren können als vernetztes Silicon alle gängigen additions-, peroxidisch- oder kondensationsvernetzten Siliconkautschuke und/oder -harze eingesetzt werden, die das Laserlicht absorbierende Zusatzstoffe a) enthalten.

In dem erfindungsgemäßen Verfahren sind Zusatzstoffe a), die einzeln oder im Gemisch eingesetzt werden können, vorzugsweise anorganische Pigmente, Ruß, Metalloxide, wie z.B. Titandioxid, Eisenoxidrot, Eisenoxidgelb, Eisenoxidschwarz, Chromoxide, Kobaltoxide, anorganische Spinelle, Perlglanzpigmente, Bleichromate, Bariumsulfate, Kupfersulfate, wasserfreie Kupfersulfate, Kupfercarbonate, Zirkonsilikate sowie in reiner Form oder in Pastenform vorliegende Metall- und Legierungspulver, wie z.B. Aluminium, Zink, Kupfer, Messing. Der Einsatz von Ruß, wasserfreiem Kupfersulfat sowie Kupfer- und Messingpulver ist dabei bevorzugt, ebenso wie der Einsatz von Kupfersulfat und/oder Kupfercarbonat.

In dem erfindungsgemäßen Verfahren werden die Zusatzstoffe a) vorzugsweise in einer Menge von 0,005 bis 30, besonders bevorzugt 0,25 bis 10, ganz besonders bevorzugt 0,1 bis 2 Gew.-%, bezogen auf die Gesamtmischung, eingesetzt.

In einer weiteren Ausführungsform der vorliegenden Erfindung befindet sich auf dem vernetzten Silicon, zusätzlich mindestens eine weitere Siliconschicht, die in Gegensatz zur unterliegenden Siliconschicht mittels Laserlicht nicht oder nur schwach beschriftet wird.

Für die mittels Laserlicht nicht oder nur schwach beschriftbare Siliconschicht können alle additions-, kondensations- oder peroxidisch vernetzten Polysiloxankautschuke und/oder -harze eingesetzt werden, die gegebenenfalls Zusatzstoffe b) enthalten.

In einer Ausführungsform der vorliegenden Erfindung werden als Zusatzstoffe b) in den durch das nicht oder nur schwach beschriftbaren Siliconschichten organische Pigmente, wie z.B. Chinacridon, Naphthol AS, Naphthol, Benzimidazolon, Isoindulin, Isoindulinonpigmente, Perylen, Perinon, Thioindigo, Anthrachinon usw., eingesetzt.

Die Zusatzstoffe b) werden dabei vorzugsweise in einer Menge von 0,005 bis 2 Gew.-%, besonders bevorzugt 0,02 bis 0,2 Gew.-%, bezogen auf die Gesamtmischung, eingesetzt.

Vorzugsweise sind die in in dieser Ausführungsform des erfindungsgemäßen Verfahrens eingesetzten Silicone Laminate aus einer mit Laserlicht beschriftbaren und mindestens einer, mittels Laserlicht nicht oder nur schwach beschriftbaren Siliconschicht.

In einer weiteren Ausführungsform der vorliegenden Erfindung besteht die durch Laserlicht nicht oder nur schwach beschriftbare Siliconschicht aus mehreren, aufeinanderliegenden, mit unterschiedlichen Zusatzstoffen b) ausgestatteten Siliconschichten.

Die obere, durch Laserlicht nicht oder nur schwach beschriftbare Siliconschicht besitzt vorzugsweise eine Dicke von 50 bis 1 000 µm, wobei die Schichtdicke der unteren mit Laserlicht beschriftbaren Siliconschicht beliebig groß sein kann.

In dem erfindungsgemäßen Verfahren werden die zu beschriftenden Gegenstände, wie Formteile, Folien und Fertigteile vorzugsweise dem Laserlicht eines kontinuierlich angeregten Nd: YAG-Lasers einer Wellenlänge von 1064 nm ausgesetzt. Die Bestrahlungsdauer ist dabei bekanntermaßen von dem eingesetzten Material und der Art des Beschriftungsverfahrens in starkem Maße abhängig.

In einer Ausführungsform des erfindungsgemäßen Verfahrens wird das für die Beschriftung notwendige Laserlicht durch einen kontinuierlich angeregten akustooptisch gütegeschaltelten Nd:YAG-Laser, der im Grundmode oder frequenzvervielfacht strahlt, einen anderen Festkörperlaser, einen CO₂-Laser oder einen Excimerlaser erzeugt.

In dem erfindungsgemäßen Verfahren erfolgt die Beschriftung der Gegenstände durch Ablenkung des Laserstrahls über rechnergesteuert drehbare Spiegel (Galvooptik) oder durch Abbilden einer Maske auf den Gegenstand (Maskenoptik). Bei der Galvooptik wird der Laserstrahl über rechnergesteuert drehbare Spiegel abgelenkt und auf das Werkstück fokussiert.

Bei der Herstellung der zu beschriftenden Gegenstände werden der unvernetzten Siliconpolymermischung gegebenenfalls Zusatzstoffe a) beigemischt und daraus nach den gängigen Verfahren Gegenstände, wie Formteile, Folien oder Fertigteile hergestellt. Anschließend werden diese mit Hilfe eines Nd:YAG-Lasers mit einer Wellenlänge von 1064 nm bestrahlt.

Zur Herstellung der aus Laminaten aus einer mit Laserlicht beschriftbaren und mindestens einer darüberliegenden, mit Laserlicht nicht oder nur schlecht beschriftbaren Siliconschicht werden die Schichten aus unvernetzten Siliconpolymermischungen und den jeweils notwendigen Zusatzstoffen b) separat gemischt, aufeinandergepreßt und vulkanisiert. Anschließend wird das so hergestellte Formteil mit einem Laser (Wellenlänge 1064 nm) bestrahlt.

Gegenstand der vorliegenden Erfindung ist zudem die Verwendung der nach dem erfindungsgemäßen Verfahren kontrastreich beschrifteten Gegenstände aus Silicon als Folien, Fertig- und Formteile. Die beschrifteten Gegenstände sind überall da einsetzbar, wo elastische Materialien beschriftet werden müssen.

Die beschrifteten Gegenstände werden vorzugsweise in Siliconschaltmatten für elektronische Geräte, wie z.B. stationäre und mobile Telefone, Computertastaturen und Tastaturen, wie Fernbedienungen, Videokameras etc. oder im Automobilbereich eingesetzt.

Die Erfindung wird an den folgenden Beispielen erläutert. Die Beispiele wirken jedoch nicht limitierend.

### Ausführungsbeispiele

Sofern nicht anders genannt, werden in den Beispielen handelsübliche zweikomponentige Flüssig-Silicon-Kautschuk-Mischungen (ISR) mit folgenden typischen Eigenschaften verwendet:

| Aussehen | transparent |
|---|---|
| Dichte (g/cm³) | 1,12 |
| Viskosität in mPa·s bei Schergeschwindigkeitsgefälle (γ̇ = 10 s⁻¹) | 650000 |
| Mischverhätnis der Komponenten A:B | 1:1 |
| Mechanische Eigenschaften gemessen an Vulkanisaten, 10'/175°C | |
| Härte (Shore A) DIN 53504 | 48 |
| Zugfestigkeit (MPa) DIN 53504 | 8,5 |
| Bruchdehnung (%) DIN 53504 | 550 |

Zur Herstellung einschichtiger Prüfplatten werden die Komponenten A und B im Verhältnis 1:1 zusammen mit den unten angegebenen Zusätzen, z.B. Farbpasten, Pigmente, Metallpulver etc., gemischt. Als Farbpasten wurden dabei, sofern nicht anders angegeben, Mischungen des jeweils genannten Zusatzes mit einem vinylendgestoppten Polydimethylsiloxan eingesetzt. Das Mischen der Komponenten, Zusätze bzw. Farbpasten erfolgt mittels eines Rührwerkes, z.B. handelsüblicher Küchenmixer, wobei die Mischdauer 3 Minuten beträgt. Die Mischung wird in eine Prüfplattenform mit einer Kavität von 160 mm x 260 mm x 2 mm mit einem 30 %igen Überschuß gefüllt. Der gefüllte Kompressionsrahmen wird in eine auf 75°C vorgeheizte Presse eingeführt und anschließend mit einem Druck von 15 t komprimiert und auf 175°C hochgeheizt. Bei dieser Temperatur wird 10 Minuten ausvulkanisiert. Die entformten Prüfplatten werden anschließend belasert.

Zur Herstellung zweischichtige Prüfplatten (Laminate) wird analog obengenanntem Verfahren zunächst eine 1mm dicke Prüfplatte in einer entsprechenden Prüfplattenform hergestellt. Die vukanisierte ca. 1 mm dicke Prüfplatte wird in eine Prüfplattenform von 2 mm Dicke eingelegt und dann mit der Mischung der zweiten Schicht analog wie oben beschrieben gefüllt und vulkanisiert. Anschließend wird das Laminat belasert.

Die Versuchsergebnisse und Einsatzmengen sind in nachfolgender Tabelle 1 aufgelistet:

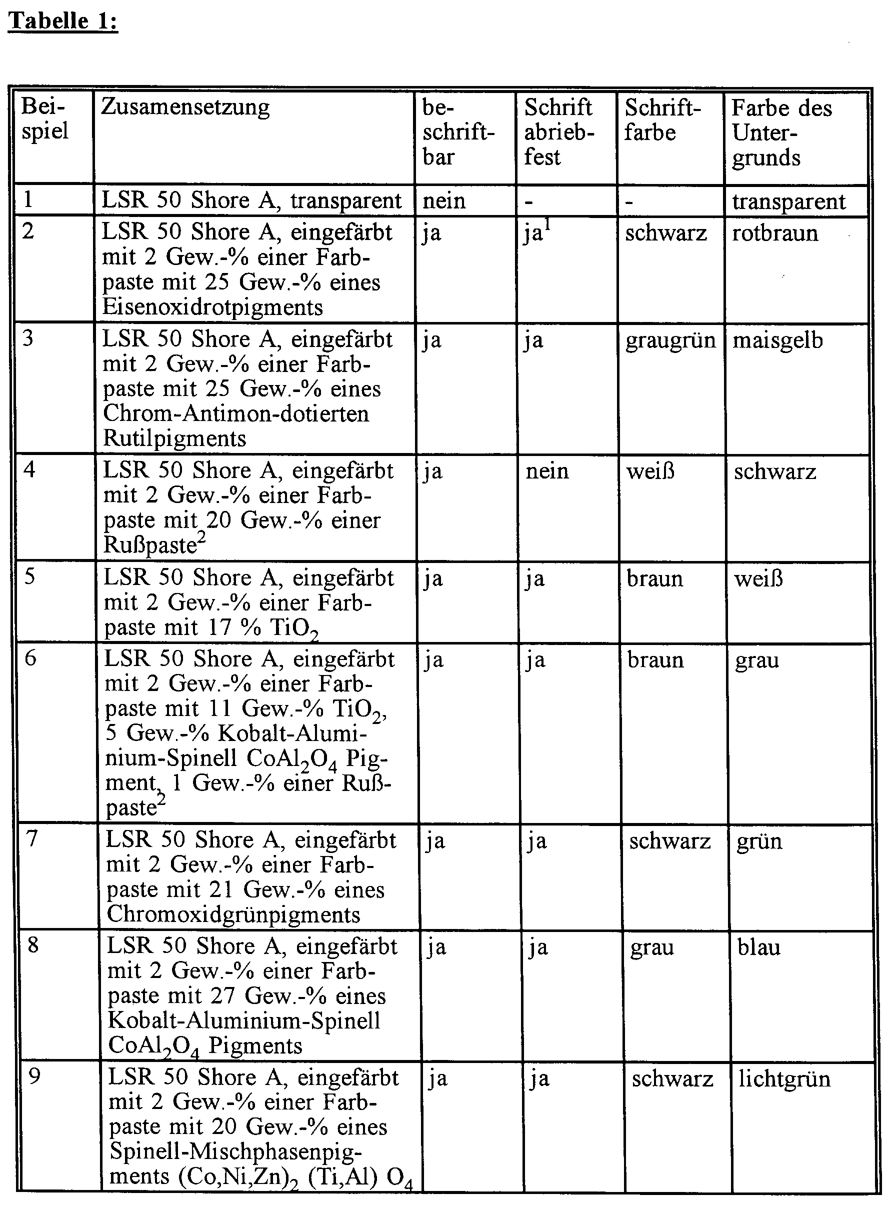

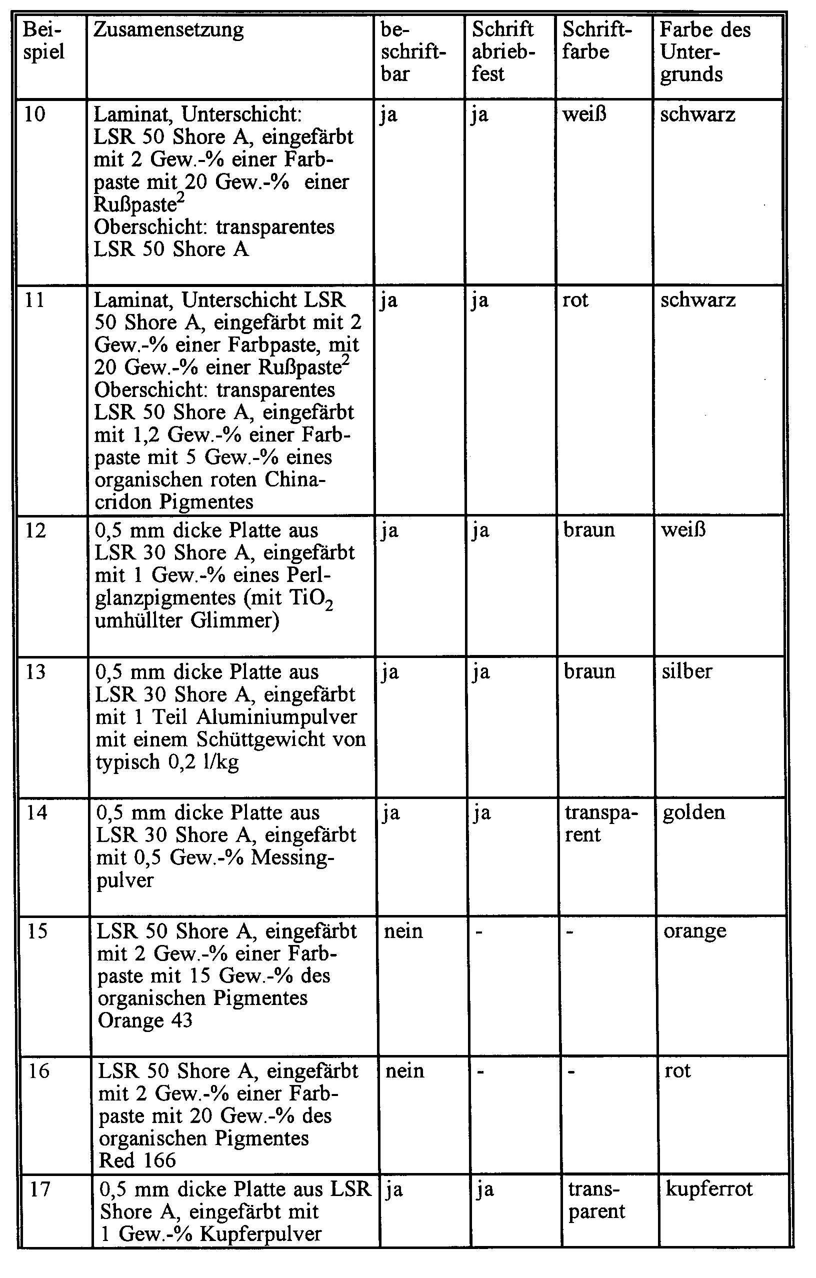

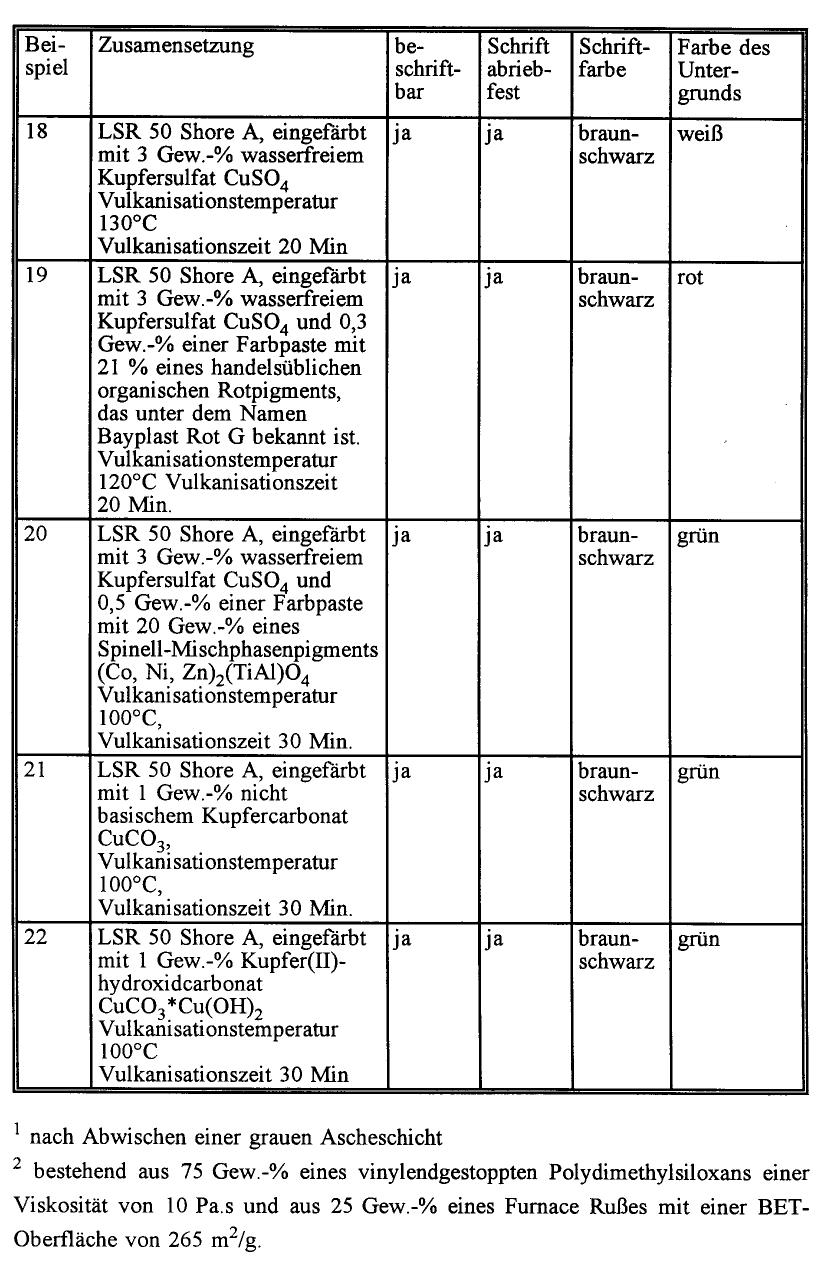

## Patentansprüche

1. Verfahren zur Herstellung von kontrastreich beschrifteten, aus Silicon bestehenden Gegenständen, dadurch gekennzeichnet, daß ein vernetztes Silicon, das, bezogen auf die Gesamtmischung 0,005 bis 30 Gew.-% anorganische Pigmente, Ruß, Metalloxide, anorganische Spinelle, Perlglanzpigmente, Bleichromate, Bariumsulfate, Kupfersulfate, wasserfreie Kupfersulfate, Kupfercarbonate, Zirkonsilikate sowie in reiner Form oder in Pastenform vorliegende Metall- und Legierungspulver als Zusatzstoffe a) enthält, die einzeln oder im Gemisch eingesetzt werden können, mit Laserlicht gezielt bestrahlt wird.

2. Verfahren nach Anspruch 1, dadurch gekennzeichnet, daß als vernetztes Silicon additions-, kondensations- oder peroxidisch vernetzte Polysiloxankautschuke und/oder -harze eingesetzt werden, die Zusatzstoffe a) enthalten.

3. Verfahren nach einem der Ansprüche 1 bis 2, dadurch gekennzeichnet, daß die Zusatzstoffe Kupfersulfat und/oder Kupfercarbonat sind.

4. Verfahren nach Anspruch 1 oder 3, dadurch gekennzeichnet, daß sich auf dem vernetzten Silicon zusätzlich mindestens eine weitere Siliconschicht befindet, die im Gegensatz zur untenliegenden Siliconschicht mittels Laserlicht nicht oder nur schwach beschriftet wird.

5. Verfahren nach Anspruch 4, dadurch gekennzeichnet, daß als zusätzliche Siliconschicht additions-, kondensations- oder peroxidisch vernetzte Polysiloxankautschuke und/oder -harze eingesetzt werden, die gegebenenfalls Zusatzstoffe b) enthalten.

6. Verfahren nach Anspruch 5, dadurch gekennzeichnet, daß als Zusatzstoffe b) organische Pigmente eingesetzt werden.

7. Verfahren nach Anspruch 6, dadurch gekennzeichnet, daß die Zusatzstoffe b) in einer Menge von 0,005 bis 2 Gew.-%, bezogen auf die Gesamtmischung, eingesetzt werden.

8. Verfahren nach einem der Ansprüche 1 bis 7, dadurch gekennzeichnet, daß die Gegenstände dem Laserlicht eines kontinuierlich angeregten akustooptisch gütegeschalteten Nd:YAG-Lasers von 1064 nm Wellenlänge ausgesetzt werden.

9. Verfahren nach einem der Ansprüche 1 bis 8, dadurch gekennzeichnet, daß das für die Beschriftung notwendige Laserlicht durch einen kontinuierlich angeregten akustooptisch gütegeschalteten Nd:YAG-Laser, der im Grundmode oder frequenzvervielfacht strahlt, andere Festkörperlaser, einen CO₂-Laser, oder einen Excimerlaser erzeugt wird.

10. Verfahren nach einem der Ansprüche 1 bis 9, dadurch gekennzeichnet, daß die Beschriftung der Gegenstände durch Ablenkung des Laserstrahls über rechnergesteuert drehbare Spiegel oder durch Abbildung einer Maske auf den Gegenstand erfolgt.

11. Verwendung der kontrastreich beschrifteten aus Silicon bestehenden Gegenstand als Fertig- und Formteile.
